Europäisches Patentamt

European Patent Office

Office européen des brevets

(11) Numéro de publication: **0 289 395**
**A1**

(12) **DEMANDE DE BREVET EUROPEEN**

(21) Numéro de dépôt: **88400960.6**

(22) Date de dépôt: **20.04.88**

(51) Int. Cl.⁴: **F 24 D 17/00**

(30) Priorité: **28.04.87 FR 8706011**

(43) Date de publication de la demande:
**02.11.88 Bulletin 88/44**

(84) Etats contractants désignés:
**AT BE CH DE ES GB GR IT LI NL SE**

(71) Demandeur: **Soleco Industries, Société Anonyme**
**Route de Perpignan**
**F-11100 Narbonne (FR)**

(72) Inventeur: **Boissonnet, Francisque**
**4, Place Sathonay**
**F-69001 Lyon (FR)**

**Manse, Alain**
**11, Rue François Coppel**
**F-78370 Plaisir (FR)**

(74) Mandataire: **Morelle, Guy Georges Alain**
**SC Morelle & Bardou 1, Avenue de Rangueil**
**F-31400 Toulouse (FR)**

(54) **Perfectionnements aux installations de chauffage à accumulation, utilisant au moins une source d'énergie intermittente.**

(57) L'invention concerne une installation de chauffage à accumulation, utilisant au moins une source d'énergie intermittente 2, cette installation comprenant : un réservoir 1 ; une canalisation 4 d'alimentation en eau froide de ce réservoir, qui débouche à la partie inférieure de celui-ci, et une canalisation 5 d'alimentation en eau chaude dudit réservoir, qui débouche à la partie supérieure de celui-ci, ces deux canalisations étant reliées en leur partie inférieure ; un moyen 9 de soutirage d'eau chaude, raccordé à ladite canalisation 5 d'alimentation en eau chaude ; et la source d'énergie intermittente 2, disposée en parallèle sur la canalisation d'alimentation en eau chaude et raccordée directement ou indirectement à celle-ci.

Selon l'invention, la canalisation 5 d'alimentation en eau chaude est équipée d'une soupape thermostatique 10 apte à couper la circulation d'eau dans cette canalisation lorsque la température de l'eau est inférieure à une température de consigne, ladite soupape 10 étant disposée en amont dudit moyen de soutirage 9, dans le sens de l'alimentation en eau chaude du réservoir, et en aval de ladite source d'énergie intermittente 2.

FIG.1

EP 0 289 395 A1

## Description

### PERFECTIONNEMENTS AUX INSTALLATIONS DE CHAUFFAGE A ACCUMULATION, UTILISANT AU MOINS UNE SOURCE D'ENERGIE INTERMITTENTE

La présente invention concerne les installations de chauffage à accumulation, utilisant au moins une source d'énergie qui n'est disponible que de façon intermittente, telle qu'un capteur solaire, une pompe à chaleur, un récupérateur de chaleur de cheminée domestique, etc ...

De telles installations comprennent généralement une source d'énergie principale, fonctionnant à l'électricité, au gaz ou au fuel, et la source utilisable de façon intermittente ne constitue qu'une source auxiliaire d'énergie plus économique.

Ces installations sont cependant relativement coûteuses, en particulier lorsqu'on souhaite adjoindre une source auxiliaire à action intermittente à une source d'énergie principale d'une installation existante.

C'est ainsi, par exemple, que le brevet européen n° 0.031.153 enseigne l'utilisation de deux réservoirs montés en série, dont l'un est chauffé par la chaleur fournie par des capteurs solaires et l'autre par une source électrique d'appoint montée à l'intérieur. Le fluide caloporteur est d'abord préchauffé dans le premier réservoir par la chaleur d'origine solaire, puis est chauffé à une température supérieure dans le second réservoir par la résistance électrique. On conçoit qu'une telle installation à deux réservoirs soit pratiquement deux fois plus encombrante et plus chère que les installations classiques à un réservoir.

On peut aussi utiliser des installations à un seul réservoir, dans lesquelles le circuit hydraulique de la source intermittente est branché directement en parallèle sur le circuit hydraulique de la source principale d'énergie, mais ce branchement entraîne de gros travaux de plomberie et d'électricité.

C'est ainsi que, dans la demande de brevet français n° 2.587.790, on a proposé un dispositif modulaire qui se monte à la partie inférieure d'un réservoir et qui permet d'effectuer le stockage thermique à partir d'une source d'énergie interne, par exemple une résistance électrique, et d'au moins une source thermique externe quelconque, par exemple des capteurs solaires, une pompe à chaleur, un récupérateur de chaleur de cheminée ou autre, ce dispositif comprenant :

- une tubulure verticale d'entrée d'eau froide qui débouche à la partie inférieure du réservoir et qui est branchée en dérivation sur une conduite d'alimentation en eau froide,

- un injecteur d'eau chaude, constitué par une tubulure verticale qui débouche à la partie supérieure du réservoir et dont l'extrémité inférieure est connectée par l'intermédiaire d'une zone d'échange de chaleur, à la conduite d'alimentation en eau froide, en aval du piquage sur celle-ci de la tubulure d'entrée d'eau froide, ladite zone d'échange de chaleur étant ainsi traversée aussi bien par le liquide froid arrivant du réservoir que par le fluide caloporteur arrivant de la ou des sources thermiques intermittentes,

- un robinet de soutirage d'eau chaude branché sur l'injecteur en aval de ladite zone d'échange thermique, et

- une vanne montée en amont du piquage de la tubulure d'entrée d'eau froide sur la conduite d'alimentation et susceptible de se déplacer automatiquement entre une position où elle interrompt l'arrivée de l'eau froide au réservoir, position qu'elle occupe tant que l'on ne soutire pas d'eau chaude du réservoir, et une position où elle rétablit l'arrivée de l'eau froide, tout en empêchant celle-ci de gagner l'injecteur.

Dans une telle installation, le déplacement de la vanne d'alimentation en eau froide du réservoir est commandé par la différence de pression résultant du soutirage d'eau chaude. Comme décrit dans la demande de brevet précitée n° 2.587.790, on évite ainsi l'alimentation directe en eau froide du robinet de soutirage d'eau chaude.

La présente invention vise à obtenir un résultat similaire, en disposant simplement une soupape thermostatique sur la canalisation d'alimentation en eau chaude du réservoir, en amont de la conduite de soutirage d'eau chaude piquée sur cette canalisation.

A cet effet, l'invention a pour objet une installation de chauffage à accumulation, utilisant au moins une source d'énergie intermittente, cette installation comprenant : un réservoir ; une canalisation d'alimentation en eau froide du réservoir, qui débouche à la partie inférieure de celui-ci et une canalisation d'alimentation en eau chaude dudit réservoir, qui débouche à la partie supérieure de celui-ci, ces deux canalisations étant reliées en leur partie inférieure ; un moyen de soutirage d'eau chaude, raccordé à ladite canalisation d'alimentation en eau chaude ; et une source d'énergie intermittente disposée en parallèle sur la canalisation d'alimentation en eau chaude et raccordée directement ou indirectement à celle-ci ; cette installation étant caractérisée en ce que ladite canalisation d'alimentation en eau chaude est équipée d'une soupape thermostatique apte à couper la circulation d'eau dans cette canalisation lorsque la température de l'eau est inférieure à une température de consigne, ladite soupape étant disposée en amont dudit moyen de soutirage, dans le sens de l'alimentation en eau chaude du réservoir, et en aval de ladite source d'énergie intermittente.

Dans cet énoncé de l'invention, le terme "directement ou indirectement", à propos de la connexion de la source d'énergie intermittente à la canalisation d'alimentation en eau chaude, signifie qu'il peut exister une dérivation d'eau à partir de cette canalisation vers la source d'énergie intermittente (capteur solaire, par exemple) avec retour à ladite canalisation, ou un simple échange thermique entre ladite canalisation et une conduite en circuit fermé comprenant ladite source d'énergie intermittente, dans laquelle circule un fluide caloporteur.

Du fait de sa position sur la canalisation d'alimentation en eau chaude du réservoir, la soupape thermostatique joue un double rôle : elle prévient une alimentation directe en eau froide du moyen de soutirage d'eau chaude et elle coupe automatiquement ladite canalisation d'alimentation en eau chaude du réservoir, lorsque la température de l'eau circulant dans cette canalisation est inférieure à la température de consigne, généralement comprise entre 35° et 45°C.

Si l'on soutire de l'eau de l'installation ici décrite, par une conduite de soutirage d'eau chaude, il viendra dans un premier temps de l'eau froide, directement de la conduite d'alimentation en eau froide, au travers de la liaison inférieure entre les deux canalisations d'alimentation du réservoir. Ce flux d'eau froide passant au travers de la soupape thermostatique viendra la refroidir rapidement, jusqu'à sa fermeture. Dans un second temps, de l'eau chaude sera soutirée de la partie supérieure de réservoir, par la canalisation d'alimentation en eau chaude.

Lorsque la source d'énergie intermittente entre en fonctionnement, la température du liquide (eau provenant de la canalisation d'alimentation en eau chaude ou fluide caloporteur d'un circuit fermé traversant un échangeur thermique), réchauffé par cette source, s'élève lentement et la soupape thermostatique s'ouvre seulement lorsque la température du liquide atteint la valeur de consigne. Avant cette ouverture, le liquide circule en circuit fermé.

Si, après ouverture de la soupape thermostatique, la température du liquide est supérieure à la température du réservoir, de l'eau chaude viendra alors alimenter le réservoir, qui se réchauffera en sa zone supérieure. Si, au contraire, la température du liquide est inférieure à celle du réservoir, celui-ci n'alimentera pas le réservoir et le liquide continuera de se réchauffer dans la source intermittente d'énergie.

Cette disposition particulière de la source intermittente par rapport au réservoir, dit thermovalve, assure donc une régulation par effet thermosiphon, qui ne fera pas l'objet de plus amples descriptions, car il est décrit en détail dans la demande de brevet européen n° 0.114.005.

Ainsi qu'on l'expliquera ci-après, un tel système présente un avantage particulier lorsque le réservoir est alimenté en eau chaude en sa partie supérieure par une canalisation extérieure d'une grande longueur, qui, la nuit en particulier, se refroidira beaucoup plus rapidement que le réservoir, avec le double risque d'une alimentation directe en eau froide du moyen de soutirage et d'une circulation inversée d'eau dans la canalisation à partir du réservoir. La soupape thermostatique disposée sur cette canalisation supprimera ces très sérieux inconvénients.

Cependant, ces systèmes ne fonctionneront parfaitement que si ladite soupape thermostatique est disposée en dessous du niveau inférieur du réservoir, ou préférentiellement à un niveau qui n'excèdera pas le cinquième de la hauteur du réservoir. En effet, l'effet de thermosiphon décrit ci-dessus ne s'effectuera que par rapport à la température de l'eau du réservoir située au même niveau.

Les dessins schématiques annexés, qui n'ont pas de caractère limitatif illustrent diverses formes de mise en oeuvre de l'invention. Sur ces dessins :

Les Figures 1 et 2 illustrent une première application de l'invention à l'alimentation d'un réservoir d'eau chaude, à partir d'une source d'énergie intermittente constituée par un capteur solaire, respectivement dans le cas d'un raccordement direct de la canalisation d'alimentation en eau chaude à ce capteur et dans le cas d'un transfert d'énergie à l'aide d'un échangeur thermique ;

les Figures 3 et 4 sont des vues analogues, dans le cas où le réservoir est alimenté en eau chaude à partir de la source intermittente d'énergie en sa partie supérieure par une canalisation extérieure d'une grande longueur ;

les Figures 5 et 6 sont des vues analogues, dans le cas d'une installation où les canalisations d'alimentation en eau chaude et en eau froide du réservoir ont toutes deux une grande longueur.

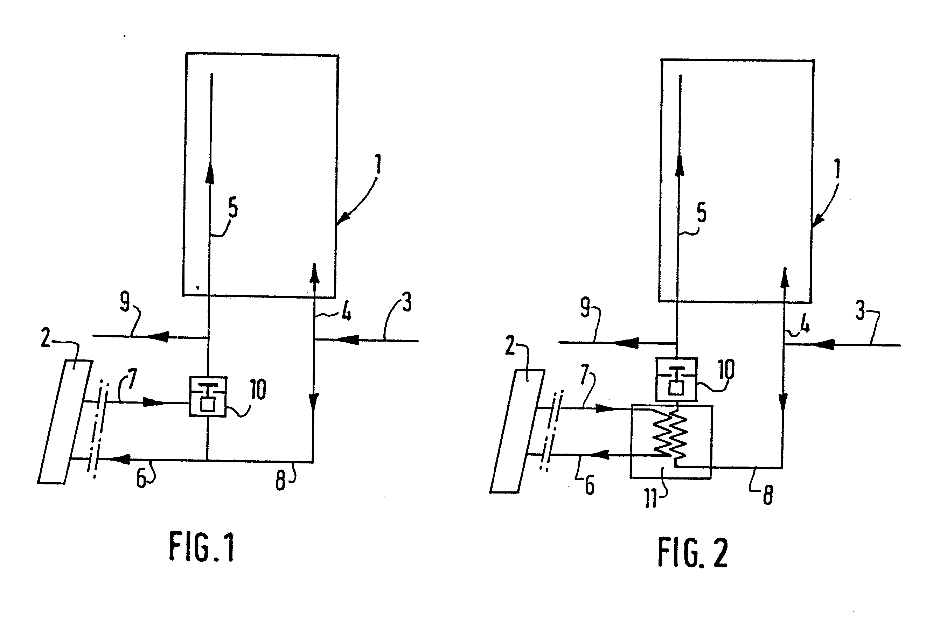

On se référera d'abord à la Figure 1, qui représente une installation de chauffage à accumulation, dans laquelle un réservoir 1, éventuellement équipé d'une source de chauffage principale telle qu'une résistance électrique, non représentée, peut être alimenté en eau chaude à partir d'une source d'appoint intermittente, un capteur solaire 2 dans le cas du dessin.

Une conduite d'eau froide sous pression, 3, alimente le réservoir 1 en eau froide par une canalisation 4, qui débouche immédiatement au-dessus du fond du réservoir.

Une canalisation 5 traverse le réservoir 1 à partir du fond et débouche à la partie supérieure de celui-ci, en constituant la canalisation d'alimentation en eau chaude de ce réservoir. A cette canalisation 5, sont raccordés, d'une part, le capteur solaire 2, par deux lignes 6 et 7, et d'autre part, la canalisation 4, par une ligne 8. Une conduite 9 de soutirage d'eau chaude, équipée d'un robinet, est branchée sur la conduite 5, en amont du réservoir 1, dans le sens d'alimentation de celui-ci, et en aval des lignes 6 et 7 raccordées au capteur solaire 2.

Conformément à l'invention, une soupape thermostatique 10 est disposée sur la canalisation 5, en aval du point de raccordement à la ligne d'alimentation en eau froide et en amont de la conduite 9 de soutirage d'eau chaude.

Ainsi qu'il a été expliqué ci-dessus, tant que la température de l'eau dans la canalisation 5, à l'emplacement de la soupape thermostatique 10, est inférieure à une valeur de consigne de cette soupape, celle-ci coupe la circulation de l'eau dans la canalisation 5. Si de l'eau chaude est soutirée du réservoir 1 par la conduite 8, elle provient uniquement de ce réservoir.

Si le capteur solaire 2 est en fonctionnement, l'eau qui circule dans les lignes 6 et 7 se réchauffe progressivement et la température au niveau de la soupape 10 finira par atteindre la valeur de consigne. La soupape 10 s'ouvrira alors, mais si la température du réservoir 1 est supérieure à la température de l'eau dans la canalisation 5, elle n'alimentera pas le réservoir et continuera à se réchauffer à partir du capteur 2. Lorsque cette température dépassera celle du réservoir 1, l'eau de la canalisation 5 circulera par effet de thermosiphon, entre les conduites 4 et 5 le réservoir 1, et l'eau du réservoir se réchauffera.

La soupape thermostatique et la thermovalve régulent ainsi respectivement par effet de seuil et de thermosiphon la température de l'eau du réservoir 1, lorsque la capteur 2 est en fonctionnement.

L'installation représentée sur la Figure 2 est en tous points analogue à la précédente et les organes déjà décrits y sont désignés par les mêmes chiffres de référence. Les lignes 6 et 7 ne sont toutefois pas raccordées à la canalisation 5, mais le transfert de calories entre ces lignes et cette canalisation s'effectue par l'intermédiaire d'un échangeur thermique 11. Dans les lignes 6 et 7 peut ainsi circuler un liquide caloporteur différent de l'eau de la canalisation 5, ce qui peut présenter de l'intérêt en certaines circonstances, en particulier en hiver, où le fluide caloporteur peut comprendre de l'antigel, sans risque de pollution de l'eau du réservoir 1.

La soupape thermostatique utilisée dans le cadre de l'invention pourra être d'un type usuel, dont il existe de nombreuses variantes sur le marché.

Dans le cas des installations représentées sur les Figures 1 et 2, la canalisation 5 d'alimentation en eau chaude du réservoir à partir de la source d'énergie intermittente est raccordée au réservoir 1 à travers le fond de celui-ci et débouche à sa partie supérieure, après en avoir traversé la plus grande partie dans le sens de la hauteur. Il existe toutefois des formes de réalisation, dans lesquelles la canalisation d'eau chaude alimente le réservoir par le haut sans traverser celui-ci.

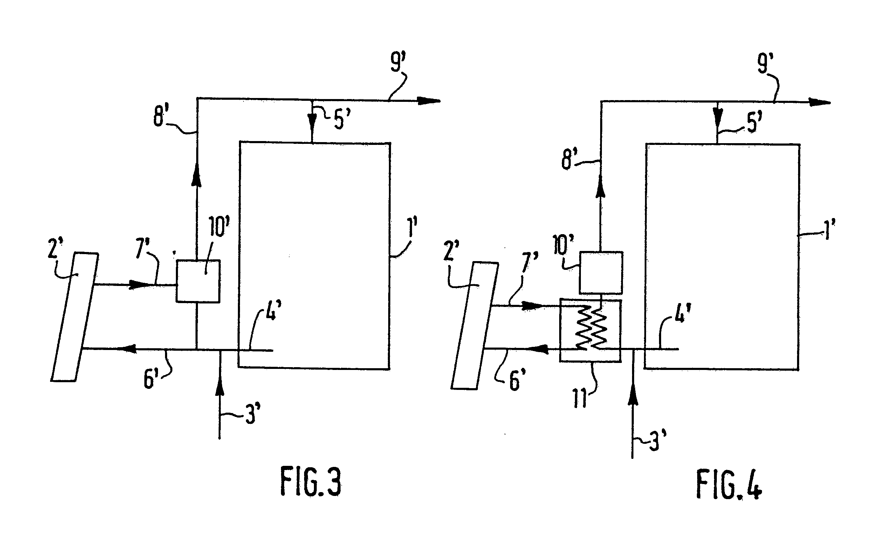

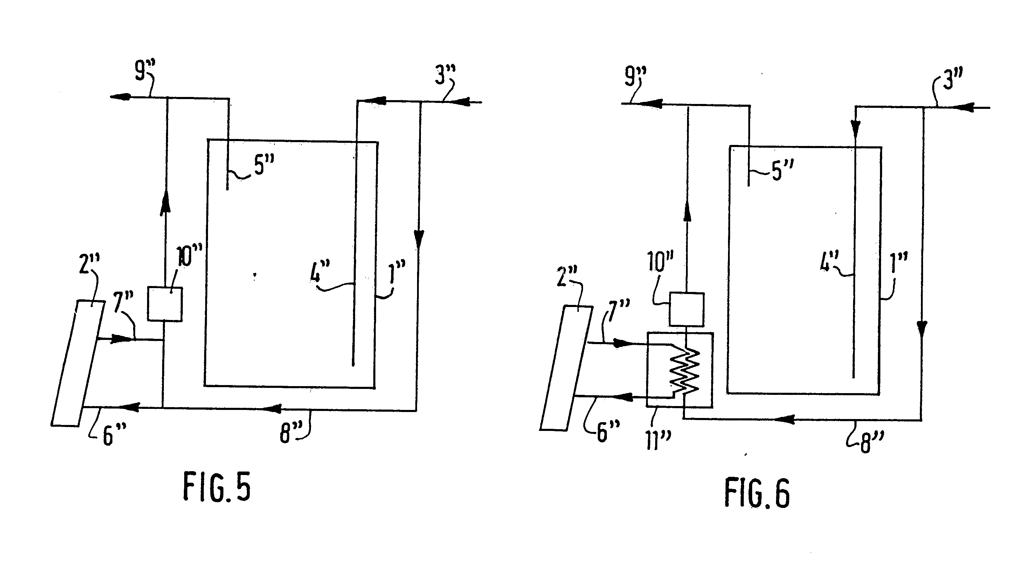

C'est ce qui est représenté sur les Figures 3 et 4, où les organes déjà décrits conservent les mêmes chiffres de référence affectés de l'indice '. Dans une telle installation, l'eau contenue dans la canalisation 5', dont le trajet extérieur au réservoir 1 est plus long que dans les réalisations précédentes, se refroidira beaucoup plus vite que l'eau du réservoir 1', lorsque la source thermique intermittente 2' ne fonctionnera pas, par exemple la nuit, dans le cas où cette source est un capteur solaire. La colonne froide ainsi créée amorcera ainsi un thermosiphon inversé entre le réservoir 1', la canalisation 5' et la canalisation d'alimentation en eau froide 4', avec pour effet un refroidissement rapide de l'eau contenue dans le réservoir. En disposant la soupape thermostatique 10' sur la canalisation 5' en amont de son raccordement à la ligne de soutirage 9' et en aval de sa connexion directe (Figure 3) ou indirecte (Figure 4) à la source intermittente 2', on remédiera à cet inconvénient, tout en assurant, comme précédemment, la régulation de l'alimentation en eau chaude du réservoir.

Les Figures 5 et 6, où les organes déjà décrits sont désignés par les mêmes chiffres de référence affectés de l'indice ", illustrent un autre forme de mise en oeuvre de l'invention, où les canalisations 4" et 5" d'alimentation en eau froide et en eau chaude, respectivement, ont des configurations différentes. Comme sur les Figures 3 et 4, la canalisation 5" alimente le réservoir 1" en eau chaude à partir du haut et a donc un long trajet extérieur à ce réservoir. Dans cette réalisation, il en est de même pour la canalisation d'eau froide 4", qui traverse le réservoir 1" à partir du haut pour déboucher au voisinage du fond. Dans de telles installations, la soupape thermostatique 10", tout en assurant comme précédemment la régulation de l'alimentation en eau chaude du réservoir 1", s'oppose à la formation d'un thermosiphon inversé lorsque les canalisations 5" ne se trouvent pas à la même température.

De nombreuses autres variantes de l'invention peuvent être imaginées par l'Homme de l'Art, sans pour cela faire oeuvre d'invention, et donc sans sortir du cadre de la présente demande.

## Revendications

1. Installation de chauffage à accumulation, utilisant au moins une source d'énergie intermittente (2), cette installation comprenant : un réservoir (1) ; une canalisation (4) d'alimentation en eau froide de ce réservoir, qui débouche à la partie inférieure de celui-ci, et une canalisation (5) d'alimentation en eau chaude dudit réservoir, qui débouche à la partie supérieure de celui-ci, ces deux canalisations étant reliées en leur partie inférieure ; un moyen (9) de soutirage d'eau chaude, raccordé à ladite canalisation (5) d'alimentation en eau chaude ; et la source d'énergie intermittente (2), disposée en parallèle sur la canalisation d'alimentation en eau chaude et raccordée directement ou indirectement à celle-ci ; cette installation étant CARACTERISEE EN CE QUE ladite canalisation (5) d'alimentation en eau chaude est équipée d'une soupape thermostatique (10) apte à couper la circulation d'eau dans cette canalisation lorsque la température de l'eau est inférieure à une température de consigne, ladite soupape (10) étant disposée en amont dudit moyen de soutirage (9), dans le sens de l'alimentation en eau chaude du réservoir, et en aval de ladite source d'énergie intermittente (2).

2. Installation selon la revendication 1, CARACTERISEE EN CE QUE la canalisation (5', 5") d'alimentation en eau chaude du réservoir (1', 1") est raccordée à la partie supérieure de ce réservoir et comporte une grande longueur à l'extérieur de celui-ci.

3. Installation selon la revendication 2, CARACTERISEE EN CE QUE la canalisation d'alimentation (4") en eau froide du réservoir (1") est raccordée à la partie supérieure de celui-ci et traverse le réservoir suivant sa hauteur pour déboucher au niveau du fond.

4. Installation selon l'une des revendications 1 à 3, CARACTERISEE EN CE QUE la soupape thermostatique (10) est disposée en dessous du niveau inférieur du réservoir (1).

5. Installation selon l'une des revendications 1 à 3, CARACTERISEE EN CE QUE la soupape thermostatique (10) est disposée préférentiellement à un niveau qui n'excède pas le cinquième de la hauteur totale du réservoir (1).

FIG.1

FIG.2

FIG.3

FIG.4

FIG.5

FIG.6

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A,D | EP-A-0 114 005  (COMPAGNIE FRANCAISE DE RAFFINAGE)<br>* Figures *<br>--- | 1,2 | F 24 D  17/00 |
| A | DE-A-2 907 657 (MESSERSCHMITT-BÖLKOW-BLOHM GmbH)<br>* Revendications; figures *<br>--- | 1 | |
| A | PATENT ABSTRACTS OF JAPAN, vol. 9, no. 333 (M-443)[2056], 27 decembre 1985, page 66 M 443; & JP-A-60 164 162 (MATSUSHITA DENKI SANGYO K.K.) 27-08-1985<br>----- | 1 | |

DOMAINES TECHNIQUES RECHERCHES (Int. Cl.4)

F 24 D
F 24 J

**Le présent rapport a été établi pour toutes les revendications**

| Lieu de la recherche | Date d'achèvement de la recherche | Examinateur |
|---|---|---|
| LA HAYE | 05-07-1988 | VAN GESTEL H.M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)